# EUROPÄISCHE PATENTSCHRIFT

(11) **EP 2 341 996 B1**
(45) Veröffentlichungstag und Bekanntmachung des Hinweises auf die Patenterteilung: **05.12.2012**
(21) Anmeldenummer: 09778206.4
(22) Anmeldetag: 29.08.2009
(51) Int. Cl.: B01D 3/08, B01D 3/42, B01D 5/00

(54) **ROTATIONSVERDAMPFER**
ROTARY EVAPORATOR
EVAPORATEUR ROTATIF

(30) Priorität: 15.10.2008 DE 102008051364
(43) Veröffentlichungstag der Anmeldung: 13.07.2011
(73) Patentinhaber: IKA - Werke GmbH & Co. KG, 79219 Staufen (DE)
(72) Erfinder: PINHACK, Hubert, 79189 Bad Krozingen (DE); SPÄTH, Martin, 79219 Staufen (DE)
(74) Vertreter: Maucher, Wolfgang
(86) Internationale Anmeldenummer: PCT/EP2009/006277
(87) Internationale Veröffentlichungsnummer: WO 2010/043283

(56) Entgegenhaltungen:
- EP-A- 0 236 813
- DE-A1- 3 718 791
- DE-A1- 19 803 711

## Beschreibung

Die Erfindung betrifft einen Rotationsverdampfer nach dem Oberbegriff von Anspruch 1.

Die Erfindung betrifft weiter ein Verfahren zum Verdampfen eines Destillierguts nach dem Oberbegriff von Anspruch 8.

Derartige Rotationsverdampfer und Verfahren zum Verdampfen eines Destillierguts sind beispielsweise bekannt aus dem Fachartikel M. T. Kramer: Ein Rotationsverdampfer-System und seine Möglichkeiten, G-I-T·Fachz. Lab., 18. Jg., September 1974, S. 862ff. und haben sich in der Praxis vielfach bewährt. Eine besonders hervorzuhebende Eigenschaft der Rotationsverdampfer besteht darin, dass durch das Drehen des Destillierkolbens während der Erhitzung des Destillierguts eine gegenüber herkömmlichen Verfahren gleichmäßigere Erhitzung des Destillierguts erreicht wird, insbesondere durch eine weitgehende Benetzung der Innenwandung des Destillierkolbens mit dem Destilliergut. Derartige Rotationsverdampfer leisten somit in der Labortechnik gute Dienste.

Aus der WO 96/05901 A1 ist ein Verfahren zur Regelung und Steuerung einer Destillations- oder Kondensationsapparatur bekannt, die ein Siedegefäß, eine Heizquelle und einen Kühler umfasst, wobei das den Kühler durchströmende Kühlwasser im Kreislauf geführt, seine Temperatur im Kreislauf erfasst und bei Erreichen eines oberen Temperaturwertes durch die Zuführung von Kaltwasser soweit ersetzt wird, bis ein unterer Temperaturwert erreicht ist. Hierbei ist eine definierte Abschaltung ausführbar, wenn, trotz Zuführung von Kaltwasser, eine Abnahme der Kühlwassertemperatur ausbleibt.

Aus der EP 0 236 813 A2 ist ein Rotationsverdampfer bekannt, bei welchem eine Regeleinrichtung eine Menge eines durch eine Kühlschlange strömenden Kühlwassers solange reduzierend regelt, bis eine gewünschte Temperaturdifferenz zwischen den Ein- und Austrittstemperaturen des Kühlwassers eingehalten ist.

Aus der DE 198 03 711 A1 ist eine Destillationsanlage bekannt, bei welcher eine Infrarotkamera zur Temperaturüberwachung eingesetzt wird, wobei die Funktion und Leistung eines Kühlkreislaufs aus der Temperatur der Zuleitung relativ zur Temperatur der Ableitung des Kühlmittels bestimmt werden.

Der Erfindung liegt die Aufgabe zugrunde, einen Rotationsverdampfer und ein Verfahren zum Verdampfen von Destilliergut zu schaffen, der bzw. das sich für die Verwendung im automatisierten Betrieb eignet.

Zur Lösung dieser Aufgabe sind bei einem Rotationsverdampfer der eingangs genannten Art die Merkmale des Anspruchs 1 vorgesehen. Insbesondere ist vorgesehen, dass an einer ersten Stelle im Strömungsweg des Kühlmediums ein erster Temperatursensor und an einer zweiten Stelle im Strömungsweg des Kühlmediums ein zweiter Temperatursensor angeordnet sind, wobei die erste Stelle von der zweiten Stelle durch einen Abschnitt des Strömungswegs des Kühlmediums beabstandet ist, und dass Mittel zur Bestimmung der Durchflussmenge des Kühlmediums durch den Abschnitt vorgesehen sind. Somit können Informationen über die momentane Kühlleistung des Kühlers gewonnen werden, die für verschiedene Verfahrensschritte bei einem automatisierten Betrieb nutzbar sind.

Der Abschnitt umfasst wenigstens einen Teil des Bereichs im Strömungsweg des Kühlmediums, in welchem das Kühlmedium die bei der Kondensation des Dampfes abgegebene Kondensationswärme aufnimmt. Der Abschnitt des Strömungswegs kann somit einen echten Teilbereich der Kühlschlange bilden. In diesem Fall sind die Temperatursensoren somit in der Kühlschlange innerhalb des Kühlers angeordnet.

Besonders günstig ist es, wenn der Abschnitt so groß wie möglich gewählt ist, insbesondere die Kühlschlange umfasst. Hierdurch wird erreicht, dass der Einfluss von Messungenauigkeiten bei der Temperaturmessung klein ist im Vergleich zu den gemessenen Temperaturdifferenzen zwischen den Temperatursensoren.

Für eine möglichst genaue Erfassung der Temperatur des in den Kühler eintretenden Kühlmediums kann vorgesehen sein, dass der erste Temperatursensor am Eintritt der Kühlschlange in den Kühler angeordnet ist. Der Temperatursensor ist somit im Bereich des Eintritts der den Strömungsweg bildenden Kühlmittelleitung des Kühlkreislaufs in den Kühler angeordnet, wobei die Position des Temperatursensors derart gewählt ist, dass Verfälschungen der Temperaturmessung aufgrund von Umgebungseinflüssen, beispielsweise durch Erwärmung oder Kühlung eines Teils der Kühlmittelleitung zwischen Kühlschlange und Temperatursensor durch Umgebungseinflüsse, vermieden werden.

Ebenso kann vorgesehen sein, dass der zweite Temperatursensor am Austritt der Kühlschlange aus dem Kühler angeordnet ist. Auch hier ist die Anordnung des Temperatursensors im Strömungsweg derart gewählt, dass eine Veränderung der Temperatur des Kühlmediums nach Austritt aus der Kühlschlange und vor Erreichen des Temperatursensors praktisch ausgeschlossen ist. Dies kann auch durch geeignete Wärmeisolation der Leitungen des Kühlkreislaufs in diesen Bereichen erreicht werden.

Für eine Angabe der Kühlleistung ist die Kenntnis der durch den Kühler je Zeiteinheit transportierten Menge an Kühlmittel erforderlich. Die Bestimmung der Durchflussmenge des Kühlmittels kann durch Vorgabe einer Durchflussmenge, beispielsweise durch Vorgabe eines Drucks im Kühlkreislauf und Begrenzung eines Durchflusses im Strömungsweg, oder durch Messung der momentanen Durchflussmenge erfolgen. Eine Ausführung, mit welcher die momentane Durchflussmenge messbar ist, kann vorsehen, dass die Mittel zur Bestimmung der Durchflussmenge des Kühlmediums durch den Abschnitt des Strömungswegs des Kühlmediums einen Durchflussmesser umfassen.

Besonders günstig ist es dabei, wenn der Durchflussmesser im Strömungsweg des Kühlmediums außerhalb des Abschnitts des Strömungswegs des Kühlmediums angeordnet ist. Hierdurch wird eine Verfälschung der gemessenen Temperaturdifferenz gegenüber der tatsächlich durch die Kühlung in der Kühlschlange bzw. dem Abschnitt bewirkten Temperaturänderung des Kühlmediums durch den Durchflussmesser, insbesondere dessen Wärmeabstrahlung und Wärmeableitung, oder durch eine Erwärmung des Kühlmediums im Durchflussmesser vermieden. Von Vorteil ist weiter, dass der Durchflussmesser bei einer Anordnung außerhalb des Abschnitts leichter zugänglich bleibt, beispielsweise für Wartungs- oder Kontrollmaßnahmen.

Besonders günstige Verhältnisse bei der Verdampfung des zu destillierenden Produktes stellen sich ein, wenn der Kühler mit einem Vakuumerzeuger verbunden ist.

Eine Ausgestaltung der Erfindung kann vorsehen, dass Mittel zur Bestimmung und/oder Ermittelung des zeitlichen Verlaufs der Temperaturdifferenz zwischen dem ersten und dem zweiten Temperatursensor und des zeitlichen Verlaufs der Durchflussmenge ausgebildet sind. Von Vorteil ist dabei, dass Informationen über Änderungen des Betriebszustands oder der Eigenschaften des Destillierguts gewinnbar und für einen automatisierten Betrieb nutzbar sind.

Beispielsweise kann vorgesehen sein, dass Mittel zur Berechnung des im Destillatkolben in einem Zeitabschnitt aufgefangenen Destillats aus dem zeitlichen Verlauf der ermittelten Temperaturdifferenz und aus dem zeitlichen Verlauf der Durchflussmenge des Kühlmediums durch den Abschnitt des Strömungswegs des Kühlmediums ausgebildet sind. Somit ist der Rotationsverdampfer beispielsweise automatisiert bis zur Gewinnung einer vorbestimmten Menge an Destillat betreibbar.

Für eine Einrichtung des Rotationsverdampfers auf die Verarbeitung verschiedener Destilliergüter kann vorgesehen sein, dass Mittel zur Eingabe und/oder Speicherung und/oder Auswahl von stoffspezifischen Angaben des Destillierguts und/oder des Destillats und/oder des Kühlmediums vorgesehen sind. Vorzugsweise sind derartige stoffspezifische Angaben zumindest durch Angaben zu der spezifischen Wärmekapazität des Kühlmediums und/oder des Destillats, der Kondensationsenthalpie des Destillats und/oder des Wirkungsgrads der Umsetzung der Kondensationswärme in die Erwärmung des Kühlmediums gegeben. Aus diesen Angaben ist die dem Kühlmedium in der Kühlschlange pro Zeiteinheit zugeführte Wärmemenge bestimmbar, die gleich der bei der Kondensation des Dampfes zum Destillat freigesetzten Wärmemenge ist. Die Wärmemenge ergibt sich dabei aus der Menge an Kühlmedium, dessen Temperaturänderung und dessen spezifischer Wärmekapazität nach bekannten Gesetzmäßigkeiten.

Es hat sich herausgestellt, dass im Bereich der Betriebstemperatur des Kühlmediums dessen Wärmekapazität nur gering veränderlich ist. Die Temperatur des Kühlmediums geht in diesem Fall in die Berechnung nicht ein, sondern kann als konstant angenommen werden. Eine vorteilhafte Ausgestaltung sieht daher vor, dass lediglich die Differenz zwischen den Temperaturen am ersten und am zweiten Temperatursensor erfasst wird.

Zur Durchführung von automatisierten Verfahrensabläufen am Rotationsverdampfer kann vorgesehen sein, dass eine Steuereinheit vorgesehen ist, mit der aus dem zeitlichen Verlauf der Temperaturdifferenz zwischen erstem und zweitem Temperatursensor und dem zeitlichen Verlauf der bestimmten Durchflussmenge ein Steuersignal für den Rotationsverdampfer ableitbar ist. Somit sind die gewonnenen Informationen über den Betriebszustand bzw. Verfahrensfortschritt beim Betrieb des Rotationsverdampfers für eine automatische Steuerung nutzbar, indem die Steuerung die generierten Steuersignale auswertet und nutzt.

Gemäß einer Ausgestaltung der Erfindung kann vorgesehen sein, dass Mittel zum Überwachen des zeitlichen Verlaufs der ermittelten Temperaturdifferenz auf zeitliche Änderungen, insbesondere rechentechnische Mittel, ausgebildet sind und dass mit den Mitteln aus dem zeitlichen Verlauf der ermittelten Temperaturdifferenz und dem zeitlichen Verlauf der bestimmten Durchflussmenge eine Information über den Beginn und/oder die Beendigung der Verdampfung einer Komponente des Destillierguts gewinnbar ist, wobei mit dem Steuersignal die Ausgabe dieser Information und/oder die Änderung der Heizleistung des Heizers und/oder des Druckes im System bewirkbar ist. Von Vorteil ist dabei, dass Änderungen im Betrieb des Rotationsverdampfers erkennbar sind. Beispielsweise wird die Temperaturdifferenz an den Endpunkten des Kühlschlange oder des Abschnitts auf Null zurückgehen, wenn die im Destillierkolben befindliche Komponente des Destillierguts vollständig verdampft ist oder wenn das im Destillierkolben verbleibende Destilliergut ein Azeotrop bildet, dessen Verdampfungstemperatur gegenüber den Verdampfungstemperaturen der Komponenten verändert ist. Es ist eine definierte Abschaltung des Heizers oder des Rotationsverdampfers und/oder eine Veränderung des Druckes im System durch das Steuersignal bewirkbar.

Zur Lösung der Aufgabe sind bei einem Verfahren der eingangs genannten Art die Merkmale des Anspruches 8 vorgesehen. Insbesondere ist vorgesehen, dass die Differenz der Temperaturen des Kühlmediums zwischen zwei Stellen im Strömungsweg des Kühlmediums, die voneinander durch einen Abschnitt des Strömungswegs des Kühlmediums beabstandet sind, kontinuierlich oder in wiederkehrenden zeitlichen Abständen ermittelt wird und dass die Durchflussmenge des Kühlmediums durch die Kühlschlange kontinuierlich oder in wiederkehrenden zeitlichen Abständen bestimmt wird. Die zeitlichen Abstände der wiederkehrenden Ermittlungen und/oder Bestimmungen kann beispielsweise durch die Taktfrequenz einer Auswerteeinheit vorgegeben sein.

Gemäß einer Ausgestaltung der Erfindung kann vorgesehen sein, dass aus dem zeitlichen Verlauf der ermittelten Temperaturdifferenz und dem zeitlichen Verlauf der bestimmten Durchflussmenge ein Steuersignal für den Rotationsverdampfer abgeleitet wird. Von Vorteil ist dabei, dass Informationen über den Fortschritt des Verdampfungsverfahrens und/oder Änderungen im Verdampfungsverfahren erfassbar und nutzbar sind.

Eine möglichst genaue Erfassung der von dem Kühlmedium aufgenommenen Wärmemenge wird erreicht, wenn als Abschnitt des Kühlmediumkreislaufs die Kühlschlange von ihrem Eintritt in den Kühler bis zu ihrem Austritt aus dem Kühler gewählt wird.

Zur Unterstützung der Verdampfung kann vorgesehen sein, dass während der Erhitzung der Kühler mit Unterdruck, insbesondere mittels eines Vakuumerzeugers, beaufschlagt wird. Als Vakuumerzeuger ist beispielsweise eine Vakuumpumpe einsetzbar.

Für eine automatisierte Durchführung des Verfahrens kann vorgesehen sein, dass das Steuersignal wenigstens einen Betriebsparameter des Rotationsverdampfers, insbesondere die Heizleistung bzw. Heizertemperatur des Heizers, den Druck im System des Rotationsverdampfers und/oder die Durchflussmenge des Kühlmediums, beeinflusst. Von Vorteil ist dabei, dass das Verfahren selbsttätig bei günstigen, insbesondere optimierten, Betriebsparametern durchführbar ist, wobei die Betriebsparameter im Verlauf des Verfahrens automatisiert nachgeregelt werden können.

Gemäß einer Ausgestaltung der Erfindung kann vorgesehen sein, dass aus dem zeitlichen Verlauf der ermittelten Temperaturdifferenz und dem zeitlichen Verlauf der bestimmten Durchflussmenge die im Destillatkolben aufgefangene, destillierte Menge ermittelt wird und dass das Steuersignal die Ausgabe des ermittelten Werts für die destillierte Menge bewirkt.

Eine vorteilhafte Ausgestaltung der Erfindung kann vorsehen, dass aus dem zeitlichen Verlauf der ermittelten Temperaturdifferenz und dem zeitlichen Verlauf der bestimmten Durchflussmenge eine Information über den Beginn und/oder die Beendigung der Verdampfung einer Komponente des Destillierguts gewonnen wird, wobei das Steuersignal die Ausgabe dieser Information und/oder die Änderung der Heizleistung des Heizers und/oder des Druckes im System bewirkt. Die Erfindung macht sich die Erkenntnis zunutze, dass vor Beginn und nach Beendigung der Verdampfung keine Kondensation im Kühler erfolgt und daher die Temperaturdifferenz an der Kühlschlange nahe Null oder gleich Null ist. Von Vorteil ist dabei auch, dass der Rotationsverdampfer im Betrieb vor Zerstörung oder Beschädigung, beispielsweise bei Erhitzung des Destillierguts über das vollständige Aufbrauchen der verfügbaren, zur Verdampfung vorgesehenen .Komponente des Destillierguts hinaus, geschützt werden kann. Insbesondere ist somit auch der Siede- oder Verdampfungsbeginn bei unbekannten Proben ermittelbar.

Es sind auch Veränderungen des als Destilliergut verwendeten Stoffgemisches während der Destillation, also während des Verdampfens, feststellbar, da diese Veränderungen Veränderungen in der Siedetemperatur und/oder in der Kondensationsenergie zur Folge haben, durch die sich die ermittelte Temperaturdifferenz verändert. Diese Änderung kann ausgewertet werden und zur Generierung eines Steuersignals zum Auswechseln des Destillatkolbens und/oder zum Abbruch der Destillation verwendet werden. Zur Erreichung einer kurzen Betriebszeit bis zur Gewinnung einer vorbestimmten Menge Destillats kann vorgesehen sein, dass aus dem zeitlichen Verlauf der ermittelten Temperaturdifferenz und dem zeitlichen Verlauf der bestimmten Durchflussmenge eine Information über die Auslastung des Kühlers gewonnen wird, wobei das Steuersignal die Ausgabe dieser Information bewirkt und/oder das Steuersignal die Betriebsparameter des Rotationsverdampfers, insbesondere die Heizleistung des Heizers, den Druck im System des Rotationsverdampfers und/oder die Durchflussmenge des Kühlmediums, derart regelt, dass die Auslastung des Kühlers optimiert wird, insbesondere bei einem vorgegeben Wert liegt, und/oder dass der Dampf nicht in den Vakuumerzeuger gelangt. Mit der Regelung der Temperaturdifferenz zwischen der ersten und der zweiten Stelle im Strömungsweg des Kühlmediums durch den Druck im Kühler und/oder die Temperatur im Heizer kann die Destillationsgeschwindigkeit an die maximal mögliche Kühlleistung des Kühlers angepasst werden, insbesondere bei vorgegebenem Mengendurchsatz an Kühlmedium. Somit ist eine Zeitoptimierung der Destillation in Abhängigkeit der verfügbaren Kühlleistung möglich.

Gemäß einer Ausgestaltung der Erfindung kann vorgesehen sein, dass bei der Ermittelung der im Destillatkolben aufgefangenen, destillierten Menge die spezifische Wärmekapazität des Kühlmediums und/oder des Destillats, die Kondensationsenthalpie des Destillats und/oder der Wirkungsgrad der Umsetzung der Kondensationswärme in die Erwärmung des Kühlmediums berücksichtigt wird/werden. Das Verfahren kann somit für eine Vielzahl von verschiedenartigen Destilliergütern und/oder für eine Vielzahl verschiedenartiger Destillierprozesse angepasst und verwendet werden. Es ist somit eine Destillationsmengenregelung durchführbar. Da die spezifische Wärmekapazität des Kühlmediums in den Arbeitsbereichen des Kühlers nur geringfügig temperaturabhängig ist, kann sie als konstant angesetzt werden. Temperaturschwankungen im Kühlmedium am Eintritt in den Kühler wirken sich nur geringfügig aus.

Eine besonders einfache Ausführung des Verfahrens, welche bereits für viele Anwendungen zufriedenstellende Ergebnisse zeigt, kann vorsehen, dass das Steuersignal durch die Differenz der ermittelten Temperaturdifferenz und einer Soll-Temperaturdifferenz bestimmt wird.

Die Erfindung wird nun anhand eines Ausführungsbeispiels näher beschrieben, ist aber nicht auf dieses Ausführungsbeispiel beschränkt. Weitere Ausführungsbeispiele ergeben sich für den Fachmann durch Kombination der Merkmale des Ausführungsbeispiels untereinander oder mit Merkmalen der Ansprüche.

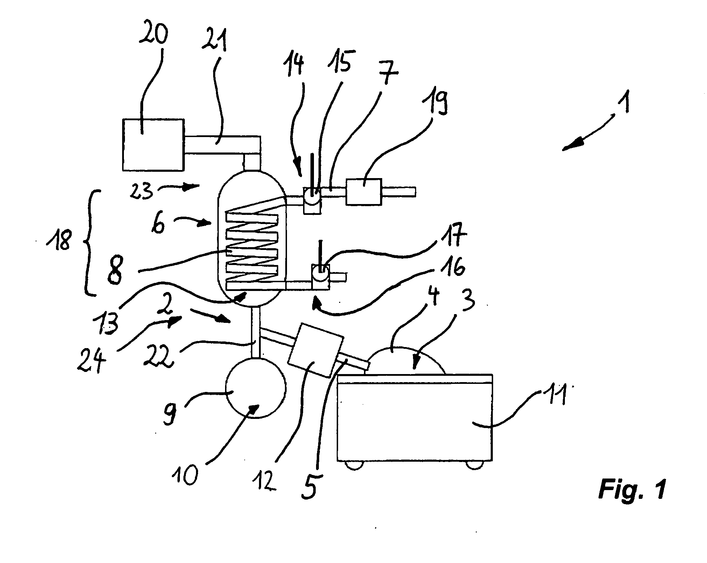

Es zeigt die Fig. 1 eine Prinzipskizze eines erfindungsgemäßen Rotationsverdampfers.

Ein im ganzen mit 1 bezeichneter Rotationsverdampfer hat einen um eine Achse 2 drehbar gelagerten Destillierkolben 4. Der Destillierkolben nimmt ein Destilliergut 3 auf.

Mit dem Destillierkolben 4 ist ein Dampfrohr 5 verbunden und somit an dessen Inneres angeschlossen. Dieses Dampfrohr 5 ist so ausgerichtet, dass es die Achse 2 umschließt und so die Drehbewegung des Dampfrohrs 5 nicht behindert.

Der Rotationsverdampfer 1 weist weiter einen Kühler 6 auf. Das Dampfrohr 5 mündet am unteren Ende 24 des Kühlers 6 in den Innenraum des Kühlers 6. In diesem Innenraum ist eine Kühlschlange 8 angeordnet. Die Kühlschlange 8 ist zur Bildung eines Strömungswegs 7 mit einem nicht weiter gezeigten Kühlkreislauf verbunden. Der Strömungsweg 7.ist mit einem Kühlmedium befüllt, welches im Betrieb zur Kühlung entlang des Strömungswegs 7 strömt.

Zur Aufnahme des Destillats 10 hat der Rotationsverdampfer 1 einen Destillatkolben 9. Das Dampfrohr 5 mündet T-förmig in ein Verbindungsrohr 22 zwischen dem Innenraum des Kühlers 6 und dem Inneren des Destillatkolbens 9, wodurch das Dampfrohr 5 den Destillierkolben 4 mit dem Kühler 6 und dem Destillatkolben 9 verbindet.

Der Destillierkolben 4 ist durch einen Heizer 11 beheizbar. Der Heizer 11 ist in bekannter Art ausgebildet und beheizt den Destillierkolben 4 über ein Wasserbad.

Während der Beheizung wird der Destillierkolben 4 durch einen Antrieb 12 um die Achse 2 gedreht.

Der durch die Erhitzung des Destillierguts 3 erzeugte Dampf 13 ist somit durch das Dampfrohr 5 leitbar und kondensiert an der Kühlschlange 8. Der Destillatkolben 9 ist in an sich bekannter Art so angeordnet, dass dieser kondensierte Dampf 13 in dem Destillatkolben 9 aufgefangen werden kann.

Zur Erfassung der Erwärmung des Kühlmediums in der Kühlschlange ist an einer ersten Stelle 14 im Strömungsweg 7 des Kühlmediums ein erster Temperatursensor 15 angeordnet und es ist an einer zweiten Stelle 16 im Strömungsweg 7 des Kühlmediums ein zweiter Temperatursensor 17 angeordnet. Die erste Stelle 14 ist hierbei von der zweiten Stelle 16 durch einen Abschnitt 18 des Strömungswegs 7 des Kühlmediums beabstandet.

Zur Bestimmung der Durchflussmenge des Kühlmediums durch den Abschnitt 18 sind Mittel 19 vorgesehen.

Im beschriebenen Ausführungsbeispiel ist der erste Temperatursensor 15 am Eintritt 14 der Kühlschlange 8 in den Kühler 6 angeordnet. Der zweite Temperatursensor 17 ist am Austritt 16 der Kühlschlange 8 aus dem Kühler 6 angeordnet. Die Positionen der Temperatursensoren sind so gewählt, dass die ermittelten Temperaturen die Erwärmung des Kühlmediums durch die Kondensation des Dampfes 13 möglichst treu wiedergeben, ohne durch einen Einfluss der Umgebung auf die Temperatur des Kühlmediums verfälscht zu werden.

Zur Bestimmung der Durchflussmenge des Kühlmediums durch den Abschnitt 18 des Strömungswegs 7 des Kühlmediums ist ein Durchflussmesser 19 im Strömungsweg 7 angeordnet. Im Ausführungsbeispiel hat der Durchflussmesser 19 ein Flügelrad, welches durch das strömende Kühlmedium angetrieben wird und so die Durchflussmenge abbildet.

Der Durchflussmesser 19 ist im Strömungsweg 7 des Kühlmediums außerhalb des Abschnitts 18 des Strömungswegs 7 des Kühlmediums angeordnet.

Der Kühler 6 ist an seinem Kopfende 23 über ein Anschlussrohr 21 mit einem Vakuumerzeuger 20 verbunden. Der Vakuumerzeuger 20 beaufschlagt den Innenraum des Kühlers 6 mit einem Unterdruck.

An dem Rotationsverdampfer 1 sind nicht weiter gezeigte Mittel zur Bestimmung und/oder Ermittelung des zeitlichen Verlaufs der Temperaturdifferenz zwischen dem ersten 15 und dem zweiten 17 Temperatursensor und des zeitlichen Verlaufs der Durchflussmenge ausgebildet. Diese Mittel weisen auch Speichermittel auf, in denen die ermittelten und/oder bestimmten zeitlichen Verläufe hinterlegbar sind.

Weiter sind ebenfalls nicht näher gezeigte Mittel zur Berechnung des im Destillatkolben 9 in einem Zeitabschnitt aufgefangenen Destillats 10 aus dem zeitlichen Verlauf der ermittelten Temperaturdifferenz und aus dem zeitlichen Verlauf der Durchflussmenge des Kühlmediums durch den Abschnitt 18 des Strömungswegs 7 des Kühlmediums ausgebildet.

Hierzu hat der Rotationsverdampfer 1 nicht weiter gezeigte Mittel zur Eingabe und/oder Speicherung und/oder Auswahl von stoffspezifischen Angaben des Destillierguts 3 und/oder des Destillats 10 und/oder des Kühlmediums. Insbesondere sind die spezifische Wärmekapazität des Kühlmediums und des Destillats 10, die Kondensationsenthalpie des Destillats 10 eingebbar und der Wirkungsgrad der Umsetzung der Kondensationswärme in die Erwärmung des Kühlmediums hinterlegt.

Für eine automatische Regelung des Verdampfungsprozesses hat der Rotationsverdampfer 1 eine Steuereinheit, mit der aus dem zeitlichen Verlauf der Temperaturdifferenz zwischen erstem 15 und zweitem 17 Temperatursensor ein Steuersignal für den Rotationsverdampfer 1 ableitbar ist. Hierzu kann der zeitliche Verlauf der bestimmten Durchflussmenge berücksichtigt werden.

An dem Rotationsverdampfer 1 sind rechentechnische Mittel zum Überwachen des zeitlichen Verlaufs der ermittelten Temperaturdifferenz auf zeitliche Änderungen ausgebildet sind. Mit diesen Mitteln ist aus dem zeitlichen Verlauf der ermittelten Temperaturdifferenz und gegebenenfalls dem zeitlichen Verlauf der bestimmten Durchflussmenge eine Information über den Beginn und/oder die Beendigung der Verdampfung einer Komponente des Destillierguts 3 gewinnbar. Ein Steuersignal bewirkt sodann die Ausgabe dieser Information und die Änderung der Heizleistung des Heizers 11 und/oder des Druckes im System.

Mit dem Rotationsverdampfer 1 ist ein Verfahren zum Verdampfen eines Destillierguts ausführbar, welches im Folgenden näher beschrieben wird.

Das zumindest teilweise zu verdampfende Destilliergut 3 wird in den Destillierkolben 4 gebracht. Der Destillierkloben 4 ist um die Achse 2 drehbar gelagert und zur Aufnahme das Destillierguts 3 ausgebildet. Anschließend wird der Destillierkolben 4 mit dem Destilliergut 3 von dem Heizer 11 erhitzt. Hierzu ist der Destillierkolben 4 teilweise in das Wasserbad des Heizers 11 getaucht. Der Heizer 11 erhitzt das Wasser des Wasserbads und regelt dessen Temperatur auf einen vorgegebenen Wert, bei welchem eine Komponente des Destillierguts 3 verdampft.

Während der Erhitzung wird der Destillierkolben 4 durch den elektrisch betriebenen Antrieb 12 um die Achse 2 gedreht, um eine gleichmäßige und schnelle Erwärmung zu erreichen. Der sich durch die Erhitzung bildende Dampf 13 wird über das die Achse 2 umschließende Dampfrohr 5 in den Kühler 6 geführt. Statt Dampf 13 ist auch die Bezeichnung Brüden gebräuchlich.

Der Kühler 6 weist in seinem Innenraum eine Kühlschlange 8 auf. Die Kühlschlange 8 ist mit einem Kühlmediumkreislauf verbunden. Somit ist ein Strömungsweg 7 für das Kühlmedium gebildet, in welchem Kühlmedium durch die Kühlschlange 8 strömt.

Der an der Kühlschlange 8 kondensierte Dampf 13 wird in dem Destillatkolben 9 aufgefangen.

Während des Verfahrens wird die Differenz der Temperaturen des Kühlmediums zwischen zwei Stellen 14, 16 im Strömungsweg 7 des Kühlmediums, die voneinander durch den Abschnitt 18 des Strömungswegs 7 des Kühlmediums beabstandet sind, kontinuierlich oder in wiederkehrenden zeitlichen Abständen ermittelt und es wird die Durchflussmenge des Kühlmediums durch diesen Abschnitt 18 kontinuierlich oder in wiederkehrenden zeitlichen Abständen bestimmt. Als Abschnitt 18 des Kühlmediumkreislaufs wird die Kühlschlange 8 von ihrem Eintritt 14 in den Kühler 6 bis zu ihrem Austritt 16 aus dem Kühler 6 gewählt.

Während der Erhitzung wird der Kühler 6 und das gesamte Destillationssystem durch den Vakuumerzeuger 20 mit Unterdruck beaufschlagt.

Aus dem zeitlichen Verlauf der ermittelten Temperaturdifferenz und dem zeitlichen Verlauf der bestimmten Durchflussmenge wird ein Steuersignal für den Rotationsverdampfer 1 abgeleitet. Dieses Steuersignal besteht aus mehreren Informationseinheiten und wird als mehrkomponentiges Signal seriell über wenigstes einen Kommunikationskanal oder parallel über mehrere Kommunikationskanäle übertragen.

Dieses Steuersignal beeinflusst einen Betriebsparameter des Rotationsverdampfers 1, beispielsweise die Heizleistung des Heizers 11, den Druck im Kühler 6 und/oder die Durchflussmenge des Kühlmediums.

Aus dem zeitlichen Verlauf der ermittelten Temperaturdifferenz und dem zeitlichen Verlauf der bestimmten Durchflussmenge wird die im Destillatkolben 9 aufgefangene, destillierte Menge ermittelt. Das Steuersignal bewirkt die Ausgabe des ermittelten Werts für die destillierte Menge.

Aus dem zeitlichen Verlauf der ermittelten Temperaturdifferenz und dem zeitlichen Verlauf der bestimmten Durchflussmenge wird weiter eine Information über den Beginn und/oder die Beendigung der Verdampfung einer Komponente des Destillierguts 3 gewonnen. Das Steuersignal bewirkt die Ausgabe dieser Information auf einem Display. Das Steuersignal bewirkt auch die Änderung der Heizleistung des Heizers 11. Somit ist die Heizleistung, insbesondere die Betriebstemperatur des Wasserbads oder des Heizers 11, und/oder der Druck im System an die Verdampfungstemperatur der zu verdampfenden Komponente angepasst.

Aus dem zeitlichen Verlauf der ermittelten Temperaturdifferenz und dem zeitlichen Verlauf der bestimmten Durchflussmenge wird eine Information über die Auslastung des Kühlers 6 gewonnen. Das Steuersignal bewirkt die Ausgabe dieser Information. Das Steuersignal regelt die Betriebsparameter des Rotationsverdampfers 1, insbesondere die Heizleistung des Heizers 11, den Druck im System des Rotationsverdampfers 1 und/oder die Durchflussmenge des Kühlmediums, derart, dass die Auslastung des Kühlers 6 optimiert wird. Hierbei wird die Temperaturdifferenz an der Kühlschlange 8 überwacht und es werden die Betriebsparameter derart verändert, dass nur auf einer Länge von cirka 80%, also zwischen 70% und 90% oder zwischen 75% und 85% oder genau 80%, der Länge der Kühlschlange 8, vom Eintritt in den Kühler 6 gemessen, Dampf 13 kondensiert. Die dieser Auslastung des Kühlers 6 entsprechende Temperaturdifferenz wird vor Betrieb für den Rotationsverdampfer 1 durch Versuche ermittelt und in der Steuerung hinterlegt. Diese Versuche erfolgen durch Variation der Betriebsparameter unter Sichtkontrolle der Kondensationsprozesse an der Kühlschlange 8, insbesondere der Größe des Bereichs der Kühlschlange 8, an welcher Dampf 13 kondensiert. Durch die Regelung auf den vorgegebenen Wert wird erreicht, dass der Dampf 13 nicht in den Vakuumerzeuger 20 gelangt. Es ist bekannt, dass oberhalb einer bestimmten, von den Betriebsparametern des Rotationsverdampfers 1, insbesondere des Kühlers 6, abhängigen Temperaturdifferenz an der Kühlschlange 8 eine quantitative Kondensation des Destillats 10 nicht mehr möglich ist. Wird der Kühler 6 in seiner Leistung derart überfordert, tritt Dampf 13 aus dem Kühler 6 aus und ist für den Prozess verloren.

Bei der Ermittelung der im Destillatkolben 9 aufgefangenen, destillierten Menge werden die spezifische Wärmekapazität des Kühlmediums und des Destillats 10, die Kondensationsenthalpie des Destillats 10 und der Wirkungsgrad der Umsetzung der Kondensationswärme in die Erwärmung des Kühlmediums berücksichtigt. Aus der ermittelten Temperaturdifferenz an der Kühlschlange 8 ergibt sich mit Kenntnis der Durchflussmenge durch die Kühlschlange 8 die vom Kühlmedium je Zeiteinheit aufgenommene Wärmemenge. Diese ist gleich der bei der Kondensation des Dampfes 13 abgegebenen Wärmemenge. Somit kann aus der Kondensationsenthalpie des Destillats 10 und der errechneten Wärmemenge die Menge kondensierten Destillats 10 berechnet werden. Für viele Stoffe sind statt der exakten spezifischen auch voreingestellte Standardwerte verwendbar.

Die Regelung und Überwachung der Auslastung des Kühlers 8 berechnet die Differenz Z=X-Y der ermittelten Temperaturdifferenz X an der Kühlschlange 8 und einer Soll-Temperaturdifferenz Y und verwendet Z als Stellgröße.

Zum Startpunkt der Destillation ist der Istwert X der Temperaturdifferenz an der Kühlschlange 8 nahe Null, da noch kein Dampf 13 an der Kühlschlange 8 kondensiert. Es wird nun ein Sollwert Y für die Temperaturdifferenz gewählt. Die Heizleistung im Heizer 11 und/oder der Druck im System wird zur vorgegebenen Soll-Temperaturdifferenz Y geregelt. Somit wird die gewünschte Menge Destillats erzeugt.

Bei dem Rotationsverdampfer 1 mit einem Kühler 6 sind im Eintritt 14 und Austritt 16 des Kühlmediums in den bzw. aus dem Kühler 6 Temperatursensoren 15, 17 angeordnet, und es wird die Durchflussmenge des Kühlmediums durch den Kühler 6 bestimmt. Aus einer Zunahme bzw. Abnahme der Differenz der Temperaturen X an den Temperatursensoren 15, 17 wird das Einsetzen bzw. die Beendigung der Kondensation im Kühler 6 abgeleitet. Aus der Differenz der Temperaturen X wird die Menge des kondensierten Destillats 10 bestimmt und es wird eine Destillationsmengenregelung durchgeführt. Durch eine Regelung der Heizleistung des Heizers 11 und/oder des Druckes im System wird die Auslastung des Kühlers 6 in Abhängigkeit von der Differenz der Temperaturen X geregelt.

## Patentansprüche

1. Rotationsverdampfer mit einem um eine Achse (2) drehbar gelagerten, ein Destilliergut (3) aufnehmenden Destillierkolben (4), der ein die Achse (2) umschließendes Dampfrohr (5) aufweist, mit einem Kühler (6), der eine zur Bildung eines Strömungswegs (7) mit einem Kühlkreislauf verbundene und ein Kühlmedium aufnehmende Kühlschlange (8) aufweist, und mit einem Destillatkolben (9) zur Aufnahme des Destillats (10), wobei das Dampfrohr (5) den Destillierkolben (4) mit dem Kühler (6) und dem Destillatkolben (9) verbindet, der Destillierkolben (4) durch einen Heizer (11) beheizbar ist, der Destillierkolben (4) während der Beheizung durch einen Antrieb (12) um die Achse (2) drehbar ist und der durch das Dampfrohr (5) geleitete und an der Kühlschlange (8) kondensierte Dampf (13) in dem Destillatkolben (9) auffangbar ist, wobei an einer ersten Stelle (14) im Strömungsweg (7) des Kühlmediums ein erster Temperatursensor (15) und an einer zweiten Stelle (16) im Strömungsweg (7) des Kühlmediums ein zweiter Temperatursensor (17) angeordnet sind und wobei die erste Stelle (14) von der zweiten Stelle (16) durch einen Abschnitt (18) des Strömungswegs (7) des Kühlmediums beabstandet ist, **dadurch gekennzeichnet, dass** einen Durchflussmesser (19) umfassende Mittel zur Bestimmung der Durchflussmenge des Kühlmediums durch den Abschnitt (18) vorgesehen sind und dass Mittel zur Berechnung des im Destillatkolben (9) in einem Zeitabschnitt aufgefangenen Destillats (10) aus dem zeitlichen Verlauf der ermittelten Temperaturdifferenz und aus dem zeitlichen Verlauf der Durchflussmenge des Kühlmediums durch den Abschnitt (18) des Strömungswegs (7) des Kühlmediums ausgebildet sind.

2. Rotationsverdampfer nach Anspruch 1, **dadurch gekennzeichnet, dass** der erste Temperatursensor (15) am Eintritt (14) der Kühlschlange (8) in den Kühler (6) angeordnet ist und/oder dass der zweite Temperatursensor (17) am Austritt (16) der Kühlschlange (8) aus dem Kühler (6) angeordnet ist.

3. Rotationsverdampfer nach Anspruch 1 oder 2, **dadurch gekennzeichnet, dass** der Durchflussmesser (19) im Strömungsweg (7) des Kühlmediums außerhalb des Abschnitts (18) des Strömungswegs (7) des Kühlmediums angeordnet ist.

4. Rotationsverdampfer nach einem der Ansprüche 1 bis 3, **dadurch gekennzeichnet, dass** Mittel zur Bestimmung und/oder Ermittelung des zeitlichen Verlaufs der Temperaturdifferenz zwischen dem ersten (15) und dem zweiten (17) Temperatursensor und des zeitlichen Verlaufs der Durchflussmenge ausgebildet sind.

5. Rotationsverdampfer nach einem der Ansprüche 1 bis 4, **dadurch gekennzeichnet, dass** Mittel zur Eingabe und/oder Speicherung und/oder Auswahl von stoffspezifischen Angaben des Destillierguts (3) und/oder des Destillats (10) und/oder des Kühlmediums vorgesehen sind, insbesondere der spezifischen Wärmekapazität des Kühlmediums und/oder des Destillats (10), der Kondensationsenthalpie des Destillats (10) und/oder des Wirkungsgrads der Umsetzung der Kondensationswärme in die Erwärmung des Kühlmediums.

6. Rotationsverdampfer nach einem der Ansprüche 1 bis 5, **dadurch gekennzeichnet, dass** eine Steuereinheit vorgesehen ist, mit der aus dem zeitlichen Verlauf der Temperaturdifferenz zwischen erstem (15) und zweitem (17) Temperatursensor und dem zeitlichen Verlauf der bestimmten Durchflussmenge ein Steuersignal für den Rotationsverdampfer (1) ableitbar ist.

7. Rotationsverdampfer nach einem der Ansprüche 1 bis 6, **dadurch gekennzeichnet, dass** Mittel zum Überwachen des zeitlichen Verlaufs der ermittelten Temperaturdifferenz auf zeitliche Änderungen, insbesondere rechentechnische Mittel, ausgebildet sind und dass mit den Mitteln aus dem zeitlichen Verlauf der ermittelten Temperaturdifferenz und dem zeitlichen Verlauf der bestimmten Durchflussmenge eine Information über den Beginn und/oder die Beendigung der Verdampfung einer Komponente des Destillierguts (3) gewinnbar ist, wobei mit dem Steuersignal die Ausgabe dieser Information und/oder die Änderung der Heizleistung des Heizers (11) und/oder des Druckes im System bewirkbar ist.

8. Verfahren zum Verdampfen eines Destillierguts, wobei das zumindest teilweise zu verdampfende Destilliergut (3) in einen um eine Achse (2) drehbar gelagerten, das Destilliergut (3) aufnehmenden Destillierkolben (4) gebracht wird, der Destillierkolben (4) mit dem Destilliergut (3) von einem Heizer (11) erhitzt wird, wobei der Destillierkolben (4) während der Erhitzung durch einen Antrieb (12) um die Achse (2) gedreht wird, der sich durch die Erhitzung bildende Dampf (13) über ein die Achse (2) umschließendes Dampfrohr (5) in einen Kühler (6) geführt wird, wobei der Kühler (6) eine Kühlschlange (8) aufweist, die zur Bildung eines Strömungswegs (7) für ein Kühlmedium mit einem Kühlmediumkreislauf verbunden ist und von dem Kühlmedium durchströmt wird, und der an der Kühlschlange (8) kondensierte Dampf (13) in einem Destillatkolben (9) aufgefangen wird, wobei die Differenz der Temperaturen des Kühlmediums zwischen zwei Stellen (14, 16) im Strömungsweg (7) des Kühlmediums, die voneinander durch einen Abschnitt (18) des Strömungswegs (7) des Kühlmediums beabstandet sind, kontinuierlich oder in wiederkehrenden zeitlichen Abständen ermittelt wird, **dadurch gekennzeichnet, dass** die Durchflussmenge des Kühlmediums durch diesen Abschnitt (18) kontinuierlich oder in wiederkehrenden zeitlichen Abständen mit Hilfe eines Durchflussmessers bestimmt wird und dass aus dem zeitlichen Verlauf der ermittelten Temperaturdifferenz und dem zeitlichen Verlauf der bestimmten Durchflussmenge die im Destillatkolben (9) aufgefangene, destillierte Menge ermittelt wird und dass das Steuersignal die Ausgabe des ermittelten Werts für die destillierte Menge bewirkt.

9. Verfahren nach Anspruch 8, **dadurch gekennzeichnet, dass** das Steuersignal insbesondere wenigstens einen Betriebsparameter des Rotationsverdampfers (1), wie die Heizleistung des Heizers (11), den Druck im System des Rotationsverdampfers (1) und/oder die Durchflussmenge des Kühlmediums, beeinflusst.

10. Verfahren nach Anspruch 8 oder 9, **dadurch gekennzeichnet, dass** als Abschnitt (18) des Kühlmediumkreislaufs die Kühlschlange (8) von ihrem Eintritt (14) in den Kühler (6) bis zu ihrem Austritt (16) aus dem Kühler (6) gewählt wird.

11. Verfahren nach einem der Ansprüche 8 bis 10, **dadurch gekennzeichnet, dass** aus dem zeitlichen Verlauf der ermittelten Temperaturdifferenz und dem zeitlichen Verlauf der bestimmten Durchflussmenge die im Destillatkolben (9) aufgefangene, destillierte Menge ermittelt wird und dass das Steuersignal die Ausgabe des ermittelten Werts für die destillierte Menge bewirkt und/oder dass aus dem zeitlichen Verlauf der ermittelten Temperaturdifferenz und dem zeitlichen Verlauf der bestimmten Durchflussmenge eine Information über den Beginn und/oder die Beendigung der Verdampfung einer Komponente des Destillierguts (3) gewonnen wird, wobei das Steuersignal die Ausgabe dieser Information und/oder die Änderung der Heizleistung des Heizers (11) und/oder des Druckes im System bewirkt.

12. Verfahren nach einem der Ansprüche 8 bis 11, **dadurch gekennzeichnet, dass** das Steuersignal die Betriebsparameter des Rotationsverdampfers (1), insbesondere die Heizleistung des Heizers (11), den Druck im System des Rotationsverdampfers (1) und/oder die Durchflussmenge des Kühlmediums, derart regelt, dass die Auslastung des Kühlers (6) optimiert wird, insbesondere bei einem vorgegebenen Wert liegt, und/oder dass der Dampf (13) nicht in den Vakuumerzeuger (20) gelangt.

13. Verfahren nach einem der Ansprüche 8 bis 12, **dadurch gekennzeichnet, dass** bei der Ermittelung der im Destillatkolben (9) aufgefangenen, destillierten Menge die spezifische Wärmekapazität des Kühlmediums und/oder des Destillats (10), die Kondensationsenthalpie des Destillats (10) und/oder der Wirkungsgrad der Umsetzung der Kondensationswärme in die Erwärmung des Kühlmediums berücksichtigt wird/werden.

14. Verfahren nach einem der Ansprüche 8 bis 13, **dadurch gekennzeichnet, dass** das Steuersignal durch die Differenz (Z) der ermittelten Temperaturdifferenz (X) und einer Soll-Temperaturdifferenz (Y) bestimmt wird.

## Claims

1. A rotary evaporator with a distillation flask (4) mounted about an axis (2) and accommodating a material to be distilled (3), said distillation flask comprising a steam pipe (5) surrounding the axis (2), with a cooler (6), which comprises a cooling coil (8) connected to a cooling circuit to form a flow path (7) and accommodating a cooling medium, and with a distillate flask (9) for accommodating the distillate (10), wherein the steam pipe (5) connects the distillation flask (4) to the cooler (6) and the distillate flask (9), the distillation flask (4) can be heated by a heater (11), the distillation flask (4) can be rotated during heating about the axis (2) by means of a drive (12) and the steam (13) conveyed through the steam pipe (5) and condensed on the cooling coil (8) can be collected in the distillate flask (9), wherein a first temperature sensor (15) is disposed at a first point (14) in the flow path (7) of the cooling medium and a second temperature sensor (17) is disposed at a second point (16) in the flow path (7) of the cooling medium and wherein the first point (14) is spaced apart from the second point (16) by a section (18) of the flow path (7) of the cooling medium, **characterised in that** means comprising a flow meter (19) are provided for determining the flow rate of the cooling medium through the section (18) and that means are constituted for calculating the distillate (10) collected in the distillate flask (9) in a time interval from the time-related course of the ascertained temperature difference and from the time-related course of the flow rate of the cooling medium through the section (18) of the flow path (7) of the cooling medium.

2. The rotary evaporator according to claim 1, **characterised in that** the first temperature sensor (15) is disposed at the entry (14) of the cooling coil (8) into the cooler (6) and/or that the second temperature sensor (17) is disposed at the exit (16) of the cooling coil (18) out of the cooler (6).

3. The rotary evaporator according to claim 1 or 2, **characterised in that** the flow meter (19) is disposed in the flow path (7) of the cooling medium outside the section (18) of the flow path (7) of the cooling medium.

4. The rotary evaporator according to any one of claims 1 to 3, **characterised in that** means are constituted for determining and/or ascertaining the time-related course of the temperature difference between the first (15) and the second (17) temperature sensor and the time-related course of the flow rate.

5. The rotary evaporator according to any one of claims 1 to 4, **characterised in that** means are provided for the inputting and/or storage and/or selection of substance-specific data of the material to be distilled (3) and/or of the distillate (10) and/or of the cooling medium, in particular the specific thermal capacity of the cooling medium and/or of the distillate (10), the condensation enthalpy of the distillate (10) and/or the efficiency of the conversion of the heat of condensation into the heating of the cooling medium.

6. The rotary evaporator according to any one of claims 1 to 5, **characterised in that** a control unit is provided, with which a control signal for the rotary evaporator (1) can be derived from the time-related course of the temperature difference between the first (15) and the second (17) temperature sensor and the time-related course of the determined flow rate.

7. The rotary evaporator according to any one of claims 1 to 6, **characterised in that** means are constituted for monitoring the time-related course of the ascertained temperature difference for changes over time, in particular computational means, and that, with the means, information concerning the start and/or the end of the evaporation of a component of the material to be distilled (3) can be obtained from the time-related course of the ascertained temperature difference and the time-related course of the determined flow rate, wherein the outputting of this information and/or the change of the heat output of the heater (11) and/or of the pressure in the system can be brought about with the control signal.

8. A method for evaporating a material to be distilled, wherein the material to be distilled (3), which is to be evaporated at least partially, is brought into a distillation flask (4) mounted in a rotatable manner about an axis (2) and accommodating the material to be distilled (3), the distillation flask (4) with the material to be distilled (3) is heated by a heater (11), wherein the distillation flask (4) is rotated during heating about the axis (2) by means of a drive (12), the steam (13) forming as a result of the heating is conveyed via a steam pipe (5) surrounding the axis (2) into a cooler (6), wherein the cooler (6) comprises a cooling coil (8), which is connected to a cooling medium circuit in order to form a flow path (7) for a cooling medium and through which the cooling medium flows, and the steam (13) condensed on the cooling coil (8) is collected in a distillate flask (9), wherein the difference in the temperatures of the cooling medium between two points (14, 16) in the flow path (7) of the cooling medium, which are spaced apart from one another by a section (18) of the flow path (7) of the cooling medium, is ascertained continuously or at recurring time intervals, **characterised in that** the flow rate of the cooling medium through this section (18) is determined continuously or at recurring time intervals with the aid of a flow meter and that the distilled quantity collected in the distillate flask (9) is ascertained from the time-related course of the ascertained temperature difference and the time-related course of the determined flow rate and that the control signal brings about the outputting of the ascertained value for the distilled quantity.

9. The method according to claim 8, **characterised in that** the control signal influences in particular at least one operating parameter of the rotary evaporator (1), such as the heat output of the heater (11), the pressure in the system of the rotary evaporator (1) and/or the flow rate of the cooling medium.

10. The method according to claim 8 or 9, **characterised in that** the cooling coil (8) from its entry (14) into the cooler (6) to its exit (16) out of the cooler is selected as the section (18) of the cooling medium circuit.

11. The method according to any one of claims 8 to 10, **characterised in that** the distilled quantity collected in the distillate flask (9) is ascertained from the time-related course of the ascertained temperature difference and the time-related course of the determined flow rate and that the control signal brings about the outputting of the ascertained value for the distilled quantity and/or that information concerning the start and/or the end of the evaporation of a component of the material to be distilled (3) is obtained from the time-related course of the ascertained temperature difference and the time-related course of the determined flow rate, wherein the control signal brings about the outputting of this information and/or the change of the heat output of the heater (11) and/or of the pressure in the system.

12. The method according to any one of claims 8 to 11, **characterised in that** the control signal regulates the operating parameters of the rotary evaporator (1), in particular the heat output of the heater (11), the pressure in the system of the rotary evaporator (1) and/or the flow rate of the cooling medium, in such a way that the load on the cooler (6) is optimised, at a preset value, and/or that the steam (13) does not pass into the vacuum generator (20).

13. The method according to any one of claims 8 to 12, **characterised in that** the specific thermal capacity of the cooling medium and/or of the distillate (10), the condensation enthalpy of the distillate (10) and/or the efficiency of the conversion of the heat of condensation into the heating of the cooling medium is/are taken into account in the ascertainment of the distilled quantity collected in the distillate flask (9).

14. The method according to any one of claims 8 to 13, **characterised in that** the control signal is determined by the difference (Z) of the ascertained temperature difference (X) and a setpoint temperature difference (Y).

## Revendications

1. Évaporateur rotatif, avec une cornue de distillation (4) montée rotative autour d'un axe (2), recevant un produit à distiller (3) et présentant un tube de vapeur (5) entourant l'axe (2), avec un refroidisseur (6), qui présente un serpentin (8) recevant un réfrigérant et relié à un circuit de refroidissement pour former un parcours d'écoulement (7), et avec une cornue de distillat (9) pour recevoir le distillat (10), sachant que le tube de vapeur (5) relie la cornue de distillation (4) au refroidisseur (6) et à la cornue de distillat (9), que la cornue de distillation (4) peut être chauffée par un dispositif de chauffage (11), que la cornue de distillation (4) peut être mise en rotation autour de l'axe (2) par un entraînement (12) pendant le chauffage et que la vapeur (13) dirigée à travers le tube de vapeur (5) et condensée sur le serpentin (8) peut être collectée dans la cornue de distillat (9), sachant qu'un premier capteur de température (15) est disposé en un premier point (14) dans le parcours d'écoulement (7) du réfrigérant et qu'un deuxième capteur de température (17) est disposé en un deuxième point (16) dans le parcours d'écoulement (7) du réfrigérant, et sachant que le premier point (14) est espacé du deuxième point (16) par un tronçon (18) du parcours d'écoulement (7) du réfrigérant, **caractérisé en ce que** des moyens comprenant un débitmètre (19) sont prévus pour déterminer le débit de passage du réfrigérant à travers le tronçon (18), et **en ce que** des moyens sont conçus pour calculer le distillat (10) recueilli pendant un intervalle de temps dans la cornue de distillat (9) à partir de l'allure dans le temps de la différence de température déterminée et à partir de l'allure dans le temps du débit de passage du réfrigérant à travers le tronçon (18) du parcours d'écoulement (7) du réfrigérant.

2. Évaporateur rotatif selon la revendication 1, **caractérisé en ce que** le premier capteur de température (15) est disposé à l'entrée (14) du serpentin (8) dans le refroidisseur (6), et/ou **en ce que** le deuxième capteur de température (17) est disposé à la sortie (16) du serpentin (8) hors du refroidisseur (6).

3. Évaporateur rotatif selon la revendication 1 ou 2, **caractérisé en ce que** le débitmètre (19) est disposé dans le parcours d'écoulement (7) du réfrigérant en dehors du tronçon (18) du parcours d'écoulement (7) du réfrigérant.

4. Évaporateur rotatif selon l'une des revendications 1 à 3, **caractérisé en ce que** des moyens sont conçus pour déterminer et/ou détecter l'allure dans le temps de la différence de température entre le premier (15) et le deuxième (17) capteurs de température, et l'allure dans le temps du débit de passage.

5. Évaporateur rotatif selon l'une des revendications 1 à 4, **caractérisé en ce que** des moyens sont prévus pour saisir et/ou mémoriser et/ou sélectionner des indications spécifiques du matériau du produit à distiller (3) et/ou du distillat (10) et/ou du réfrigérant, en particulier la capacité calorifique spécifique du réfrigérant et/ou du distillat (10), l'enthalpie de condensation du distillat (10) et/ou le rendement de la transformation de la chaleur de condensation en chauffage du réfrigérant.

6. Évaporateur rotatif selon l'une des revendications 1 à 5, **caractérisé en ce qu'**il est prévu une unité de commande qui permet de produire, à partir de l'allure dans le temps de la différence de température entre le premier (15) et le deuxième (17) capteurs de température et de l'allure dans le temps du débit de passage déterminé, un signal de commande pour l'évaporateur rotatif (1).

7. Évaporateur rotatif selon l'une des revendications 1 à 6, **caractérisé en ce que** des moyens, notamment des moyens de calcul, sont conçus pour surveiller l'allure dans le temps de la différence de température déterminée quant à ses variations dans le temps, et **en ce qu'**avec les moyens, à partir de l'allure dans le temps de la différence de température déterminée et de l'allure dans le temps du débit de passage déterminé, on peut obtenir une information sur le début et/ou l'achèvement de l'évaporation d'un composant du produit à distiller (3), sachant qu'avec le signal de commande, on peut provoquer l'édition de cette information et/ou la modification de la puissance de chauffage du dispositif de chauffage (11) et/ou de la pression dans le système.

8. Procédé pour évaporer un produit à distiller, sachant que le produit à distiller (3), que l'on doit au moins partiellement évaporer, est placé dans une cornue de distillation (4) recevant le produit à distiller (3) et montée rotative autour d'un axe (2), et que la cornue de distillation (4) pourvue du produit à distiller (3) est chauffée par un dispositif de chauffage (11), sachant que la cornue de distillation (4) est mise en rotation autour de l'axe (2) par un entraînement (12) pendant le chauffage, et que la vapeur (13) qui se forme du fait du chauffage est dirigée dans un refroidisseur (6) par l'intermédiaire d'un tube de vapeur (5) entourant l'axe (2), sachant que le refroidisseur (6) présente un serpentin (8) qui est relié à un circuit de réfrigérant afin de former un parcours d'écoulement (7) pour un réfrigérant et est traversé par le flux de réfrigérant, et que la vapeur (13) condensée sur le serpentin (8) est collectée dans une cornue de distillat (9), sachant que la différence des températures du réfrigérant entre deux points (14, 16) dans le parcours d'écoulement (7) du réfrigérant, qui sont mutuellement espacés par un tronçon (18) du parcours d'écoulement (7) du réfrigérant, est déterminée en continu ou à intervalles de temps périodiques, **caractérisé en ce qu'**on détermine à l'aide d'un débitmètre en continu ou à intervalles de temps périodiques le débit de passage du réfrigérant à travers ce tronçon (18), et **en ce qu'**on détermine la quantité distillée collectée dans la cornue de distillat (9) à partir de l'allure dans le temps de la différence de température déterminée et de l'allure dans le temps du débit de passage déterminé, et **en ce que** le signal de commande provoque l'édition de la valeur déterminée pour la quantité distillée.

9. Procédé selon la revendication 8, **caractérisé en ce que** le signal de commande influence notamment au moins un paramètre de fonctionnement de l'évaporateur rotatif (1), tel que la puissance de chauffage du dispositif de chauffage (11), la pression dans le système de l'évaporateur rotatif (1) et/ou le débit de passage du réfrigérant.

10. Procédé selon la revendication 8 ou 9, **caractérisé en ce que**, comme tronçon (18) du circuit de réfrigérant, on sélectionne le serpentin (8) depuis son entrée (14) dans le refroidisseur (6) jusqu'à sa sortie (16) hors du refroidisseur (6).

11. Procédé selon l'une des revendications 8 à 10, **caractérisé en ce qu'**on détermine la quantité distillée collectée dans la cornue de distillat (9) à partir de l'allure dans le temps de la différence de température déterminée et de l'allure dans le temps du débit de passage déterminé et **en ce que** le signal de commande provoque l'édition de la valeur déterminée pour la quantité distillée, et/ou **en ce qu'**à partir de l'allure dans le temps de la différence de température déterminée et de l'allure dans le temps du débit de passage déterminé, on obtient une information sur le début et/ou l'achèvement de l'évaporation d'un composant du produit à distiller (3), sachant que le signal de commande provoque l'édition de cette information et/ou la modification de la puissance de chauffage du dispositif de chauffage (11) et/ou de la pression dans le système.

12. Procédé selon l'une des revendications 8 à 11, **caractérisé en ce que** le signal de commande régule les paramètres de fonctionnement de l'évaporateur rotatif (1), notamment la puissance de chauffage du dispositif de chauffage (11), la pression dans le système de l'évaporateur rotatif (1) et/ou le débit de passage du réfrigérant, de telle sorte que le coefficient d'utilisation du refroidisseur (6) est optimisé, notamment se situe à une vapeur prédéfinie, et/ou que la vapeur (13) ne parvient pas dans le générateur de vide (20).

13. Procédé selon l'une des revendications 8 à 12, **caractérisé en ce que**, pour la détermination de la quantité distillée collectée dans la cornue de distillat (9), on prend en compte la capacité calorifique spécifique du réfrigérant et/ou du distillat (10), l'enthalpie de condensation du distillat (10) et/ou le rendement de la transformation de la chaleur de condensation en chauffage du réfrigérant.

14. Procédé selon l'une des revendications 8 à 13, **caractérisé en ce que** le signal de commande est déterminé par la différence (Z) entre la différence de température déterminée (X) et une différence de température de consigne (Y).
